# EUROPEAN PATENT SPECIFICATION

(11) **EP 1 317 132 B1**
(45) Date of publication and mention of the grant of the patent: **29.04.2009**
(21) Application number: 01958470.5
(22) Date of filing: 24.08.2001
(51) Int. Cl.: H04N 1/387, G06T 11/80, G09G 5/00

(54) **RANGE DESIGNATING DEVICE, RANGE DESIGNATING METHOD AND COMPUTER-READABLE RECORDING MEDIUM**
VORRICHTUNG UND VERFAHREN ZUR BEREICHSBESTIMMUNG UND COMPUTERLESBARES AUFNAHMEMEDIUM
DISPOSITIF ET PROCEDE DE DESIGNATION DE CHAMPS ET SUPPORT D'ENREGISTREMENT LISIBLE PAR INFORMATIQUE

(30) Priority: 04.09.2000 JP 2000266589
(43) Date of publication of application: 04.06.2003
(73) Proprietor: Brother Kogyo Kabushiki Kaisha, Nagoya-shi, Aichi-ken 467-8561 (JP)
(72) Inventor: ITO, Chitoshi, c/o BROTHER KOGYO K K, Nagoya-shi, Aichi 467-8561 (JP)
(74) Representative: Hofer, Dorothea
(86) International application number: PCT/JP2001/007262
(87) International publication number: WO 2002/021825

(56) References cited:
- GB-A- 2 078 411
- JP-A- 1 190 068
- JP-A- 7 021 342
- JP-A- 7 087 299
- JP-A- 2000 040 142
- US-A- 5 973 692
- MICHAEL GRADIAS: "Das grosse Buch Photoshop 5.5" 1999, DATA BECKER , DÜSSELDORF , XP002370370 * pages 215-217 *

## Description

### TECHNICAL FIELD

The present invention relates to a range specification device capable of specifying a desired range on the screen of a display device, a range specification method, and a record medium storing a program for the range specification.

### BACKGROUND OF THE INVENTION

When a rectangular range of a desired size is specified at a desired position on the screen of a display device (computer display etc.), the range specification is generally carried out by designating two diagonal points (points at both ends of a diagonal line) of the rectangular range. In this case, the user presses a button of a mouse with the tip of a mouse cursor or pointer (in the shape of an arrow) placed at one diagonal point of the rectangular range, moves the mouse cursor tip to the other diagonal point by dragging the mouse with the button pressed, and releases the button. By such mouse operation, a rectangular range having the two diagonal points (designated by the mouse cursor tip at the moments when the mouse button was pressed and released) can be specified.

Image data contained in the rectangular range specified by the above operation can be printed out using any application software supporting the print function. However, when the image data contained in the rectangular range specified as above has to be printed out in a size that exactly matches, for example, the width of a prepared sheet of paper, the correlation between dots displayed on the screen and printing dots of a printing device generally becomes complicated, by which the print quality tends to be deteriorated.

### DISCLOSURE OF THE INVENTION

The present invention has been made in consideration of the above problems. It is therefore the primary object of the present invention to provide a range specification device, a range specification method, and a computer-readable record medium storing a program for the execution of the range specification method, by which image data contained in a rectangular frame being selected in a display area can be printed out with high print quality.

In order to achieve the above object, a range specification device in accordance with the present invention is provided in claim 1.

A range specification method in accordance with the present invention is defined in claim 7.

A record medium in accordance with the present invention is defined in claim 9.

Incidentally, in the present invention, the expression "integral multiple" includes 1-fold, that is, a case where the number of display dots is equal to a preset dot number. The "predetermined input" can be realized by a simple operation such as pressing the "Shift" key of a keyboard, with no need of complex operations.

By the above composition, the length (width direction length or lengthwise direction length) of the range surrounded by the frame is adjusted so that the number of display dots within the length will be an integral multiple or an integral submultiple integer of the preset dot number. Consequently, the correlation between the preset dot number and the number of dots within the specified range becomes clear and simple and thereby the quality of outputted images can be maintained high.

Therefore, when output control is carried out so that the length (width direction length or lengthwise direction length) will be outputted in a preset length corresponding to the preset dot number, the output control can be carried out after the length (width direction length or lengthwise direction length) of the range is scaled up or down so that the number of display dots of the image (captured from the display area by the range specification) in the width direction or lengthwise direction will be an integral multiple or an integral submultiple integer of the preset dot number. For example, when the output process is printing process and the preset dot number is the number of dots of a printing head contained in the aforementioned preset length, the correlation between dots within the width direction length or lengthwise direction length of the specified range and printing dots becomes clear and simple at the stage when print control is carried out, by which print output of higher quality can be obtained.

### BRIEF DESCRIPTION OF THE DRAWINGS

Fig. 1 is a schematic diagram illustrating a personal computer embodying a range specification device in accordance with an embodiment of the present invention and a tape printing device that is connected to the personal computer;
Fig. 2 is a block diagram of the personal computer of Fig. 1 in accordance with the embodiment of the present invention;
Figs. 3A, 3B and 3C are schematic diagrams showing an example of length adjustment of a rectangular range on a display according to the embodiment when "vertical tape setting" is employed;
Figs. 4A and 4B are schematic diagrams showing an example of length adjustment of a rectangular range on a display according to the embodiment when "horizontal tape setting" is employed;
Fig. 5 is a flow chart for explaining a procedure of range specification in accordance the embodiment of the present invention;
Fig. 6 is a flow chart for explaining a procedure of range specification in accordance the embodiment of the present invention;
Fig. 7 is a flow chart for explaining a procedure of range specification in accordance the embodiment of the present invention;
Fig. 8 is a flow chart for explaining a procedure of range specification in accordance the embodiment of the present invention;
Fig. 9 is a flow chart for explaining a procedure of range specification in accordance the embodiment of the present invention;
Fig. 10 is a flow chart for explaining a procedure of range specification in accordance the embodiment of the present invention;
Fig. 11 is a flow chart for explaining a procedure of range specification in accordance the embodiment of the present invention; and
Figs. 12A, 12B and 12C are schematic diagrams showing an example of length adjustment of a circular range on a display according to another embodiment of the present invention.

### BEST MODE FOR CARRYING OUT THE INVENTION

Referring now to the drawings, a description will be given in detail of preferred embodiments in accordance with the present invention.

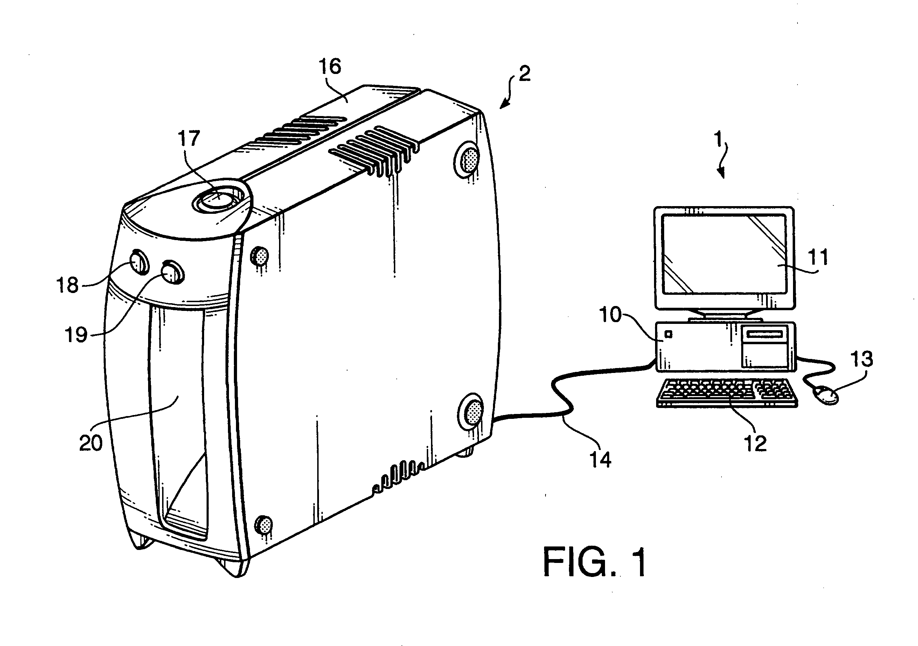

Fig. 1 is a schematic diagram illustrating a personal computer embodying a range specification device in accordance with an embodiment of the present invention and a tape printing device that is connected to the personal computer. The personal computer 1 shown in Fig. 1 includes a main body 10 and a display 11, a keyboard 12 and a mouse 13 which are connected to the main body 10. The main body 10 is connected with the tape printing device 2 by a cable 14. In the main body 10 of the personal computer 1, various devices such as a CPU (Central Processing Unit), ROM (Read Only Memory), RAM (Random Access Memory), HDD (hard disk drive), FDD (Floppy Disk Drive) and CD-ROM drive are installed. The personal computer 1 may be connectable to the Internet via communications equipment (modem etc.), LAN, etc.

In this embodiment, the HDD of the personal computer 1 stores a variety of general-purpose application software (browser, word processor, etc.) and special-purpose editor software for the editing of print data for the tape printing device 2 (hereafter, referred to as "tape editor"), in addition to a GUI-based OS (Operating System) such as Microsoft Windows (brand name). The HDD may further store application software (hereafter, referred to as "assistant software") for supplying selected data (data of an arbitrary part selected by the range specification from data being displayed on the display 11 by an application such as browser) to another application such as the tape editor.

The OS is equipped with functions for displaying the arrow-shaped mouse cursor on the display 11 on various applications (browser etc.), moving the mouse cursor to a proper position on the display 11 according to the movement of the mouse 13, and drawing a frame line (indicating the rectangular range whose two diagonal points (starting point and current point (endpoint)) have been specified by the user by use of the mouse cursor) on the display 11.

Further, the HDD in this embodiment stores "specified range length adjustment software" for adjusting the length of the rectangular range in the horizontal or vertical direction if the "Shift" key of the keyboard 12 is pressed while the rectangular frame drawn by the mouse operation is being displayed on the display 11. The specified range length adjustment software is automatically activated for the length adjustment when a "range specification state" is enabled by the mouse operation. The details of the length adjustment process will be described later.

The browser has a function for displaying text data and/or image data that are transmitted from WWW servers on the Internet to the personal computer 1 on the display 11, as well as displaying text/image data that have been stored in the HDD, FD, CD-ROM, etc. For example, the text data includes character string data expressed by HTML (HyperText Markup Language), and the image data includes data of various types (GIF, JPEG, BMP, etc.) pasted in the HTML text by use of tags.

The tape editor is software for carrying out drawing control so that text/image data obtained by image capturing (from the data displayed by the browser) after the range specification (or by copying operation or by drag & drop operation to the assistant software's display area on the display 11) will be drawn and displayed on the display 11, carrying out an editing process (automatic formatting/editing and/or manual editing by the user) to the data, printing the edited data on a tape (sheet) loaded on the tape printing device 2, and cutting the tape at a proper position. The user can edit the contents of the data to be printed on the tape, the position of cutting the tape, etc. by operating the personal computer 1 seeing the display 11.

The assistant software, functioning as a so-called portal application realizing the data capturing from the browser and the data supply to the tape editor, is a relatively small and lightweight application. Therefore, the assistant software consumes little system resource even when it stays resident in memory, contributing to operational stability of the personal computer 1. In this embodiment, data displayed on the browser can be supplied to the tape editor by: the drag & drop operation to the assistant software's display area on the display 11; the screen capturing operation; or the copying operation.

The tape printing device 2, storing the tape as a rolled print medium and an ink ribbon cassette, is capable of printing desired text and images on the tape by letting a thermal head thermally transfer the ink in the ink ribbon to the surface of the tape. In this embodiment, the thermal head includes 800 heating elements that are arranged one-dimensionally for almost the total width of the tape.

The tape and the ink ribbon cassette can be loaded at proper positions in the tape printing device 2 by opening a cover 16 by pushing a cover open button 17. On the surface of the enclosure of the tape printing device 2, a power switch 18, an LED 19 (for indicating various statuses of the tape printing device 2 by lighting up, blinking, etc.), and a tape outlet 20 are provided. The tape printing device 2 can also be laid down although it is stood up in Fig. 1.

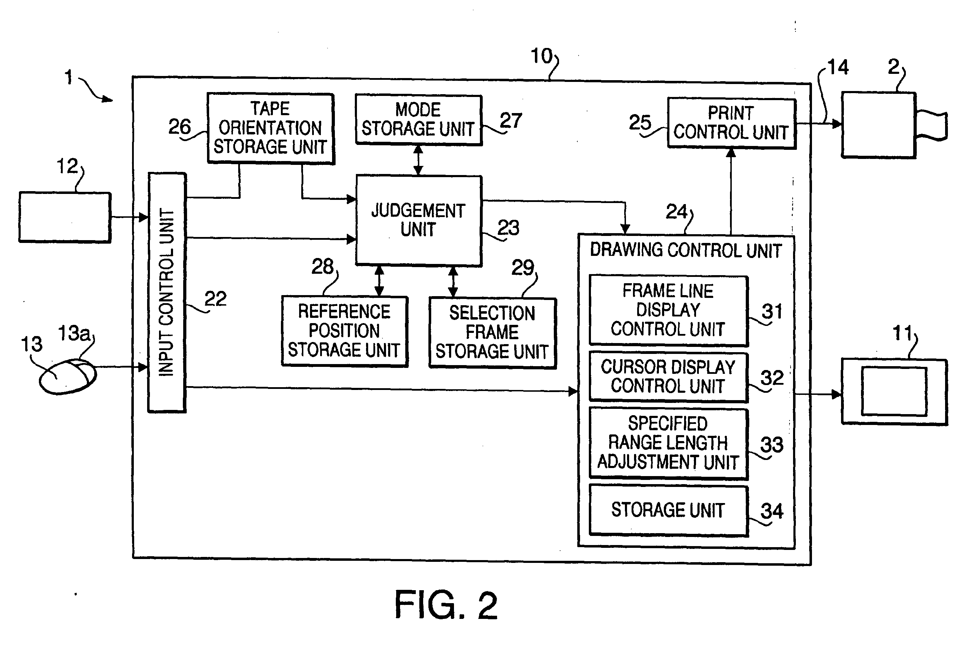

Next, the detailed composition of the personal computer 1 as the range specification device of the embodiment will be explained with reference to Fig. 2. Fig. 2 is a block diagram of the personal computer 1 in accordance with the embodiment of the present invention.

As shown in Fig. 2, the main body 10 of the personal computer 1 of this embodiment includes an input control unit 22, a judgment unit 23, a drawing control unit 24, a print control unit 25, a tape orientation storage unit 26, a mode storage unit 27, a reference position storage unit 28 and a selection frame storage unit 29, which are implemented by the installation of the OS and other software in the personal computer 1. The drawing control unit 24 includes a frame line display control unit 31, a cursor display control unit 32, a specified range length adjustment unit 33, and a storage unit 34. Each unit in the main body 10 is realized by a combination of hardware (CPU, RAM, ROM, HDD, etc.) and software (OS etc.).

The input control unit 22 receives input signals from the mouse 13 (concretely, a press/release signal from predetermined one of the right/left mouse buttons (left button 13a in this embodiment) and a mouse movement signal according to the rotation of the mouse ball), as well as input signals from the keyboard 12. The judgment unit 23 receives data from the input control unit 22, the mode storage unit 27, the reference position storage unit 28 and the selection frame storage unit 29 and makes various judgments as will be explained later. The drawing control unit 24 receives data from the input control unit 22, the judgment unit 23, etc. and thereby controls the drawing on the display 11.

The frame line display control unit 31 of the drawing control unit 24 controls the drawing of the rectangular frame line on the display 11 according to the movement of the mouse cursor. The cursor display control unit 32 controls the movement of the mouse cursor on the display 11 according to the movement of the mouse 13. The storage unit 34 temporarily stores data necessary for the control by the drawing control unit 24.

The specified range length adjustment unit 33 carries out the adjustment of the horizontal length or vertical length of the rectangular range if the pressing of the "Shift" key of the keyboard 12 is detected and informed by the input control unit 22 while the rectangular frame by the mouse operation is being displayed on the display 11. Specifically, the horizontal or vertical length (hereafter, simply referred to as "Length") of the specified rectangular range is adjusted based on a preset dot number (for example, 800 dots in this embodiment: the number of dots of the thermal head, which corresponds to the maximum print width (e.g. 700 mm) on the tape used for the tape printing device 2), so that the number of display dots within the Length of the rectangular range on the display 11 will be an integral multiple of the preset dot number (e.g. 1600 dots, 2400 dots) or an integral submultiple integer (an integer that is an integral multiple) of the preset dot number (e.g. 400 dots, 200 dots, 100 dots).

The scaling factor relative to the preset dot number (the ratio between the number of display dots within the Length of the rectangular range after the length adjustment and the preset dot number) is determined so that the number of display dots after the length adjustment and that before the length adjustment will be minimum under the above conditions and the number of display dots after the length adjustment will be an integer.

Whether the "Length" is the horizontal length or the vertical length of the rectangular range is determined depending on the direction of the printing of letters on the tape, that is, depending on whether the letters printed by the tape printing device 2 are arranged in the width direction of the tape (vertical tape setting) or in the lengthwise direction of the tape (horizontal tape setting) . In the case of vertical tape setting, the length in the display's horizontal direction (letter arrangement direction, direction corresponding to the tape width direction (head arrangement direction)) is employed as the "Length" of the rectangular range. On the other hand, in the case of horizontal tape setting, the length in the display's vertical direction (direction perpendicular to the letter arrangement direction, direction corresponding to the tape width direction (head arrangement direction)) is employed as the "Length" of the rectangular range.

The print control unit 25 receives data from the drawing control unit 24 and controls the printing of the contents of data from the tape editor by the tape printing device 2. The tape orientation storage unit 26 stores information concerning the letter printing direction on the tape which has currently been set (vertical tape setting or horizontal tape setting). The setting information in the tape orientation storage unit 26 can be changed by the user by operating the keyboard 12 or mouse 13. The mode storage unit 27 stores information concerning whether the personal computer 1 is in the range specification state or not, whether the range specification state is in a starting point setting mode or an endpoint setting mode, etc. In this embodiment, a point at which the left button 13a of the mouse 13 is pressed is set as the starting point (a diagonal point) of the rectangular range, and a point at which the left button 13a is released is set as the endpoint (the other diagonal point opposite to the starting point) of the rectangular range.

The reference position storage unit 28 stores the coordinates of the two diagonal points of the rectangular range as reference points of the specified rectangular range. The selection frame storage unit 29 stores the coordinates of display dots located on the selection frame displayed on the display 11. The position of the selection frame stored in the selection frame storage unit 29 is rewritten according to the result of the length adjustment by the specified range length adjustment unit 33.

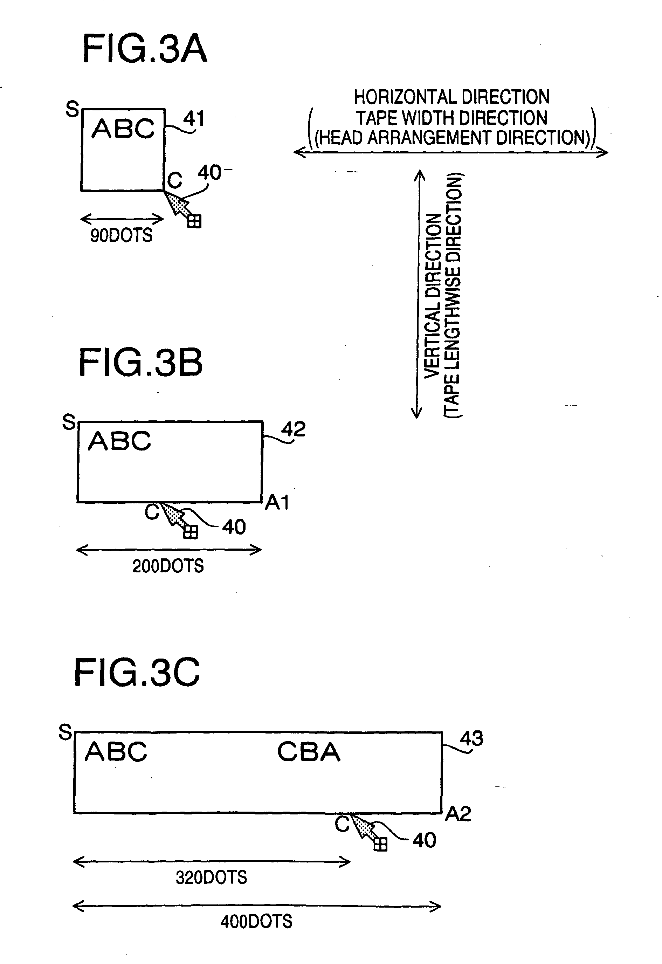

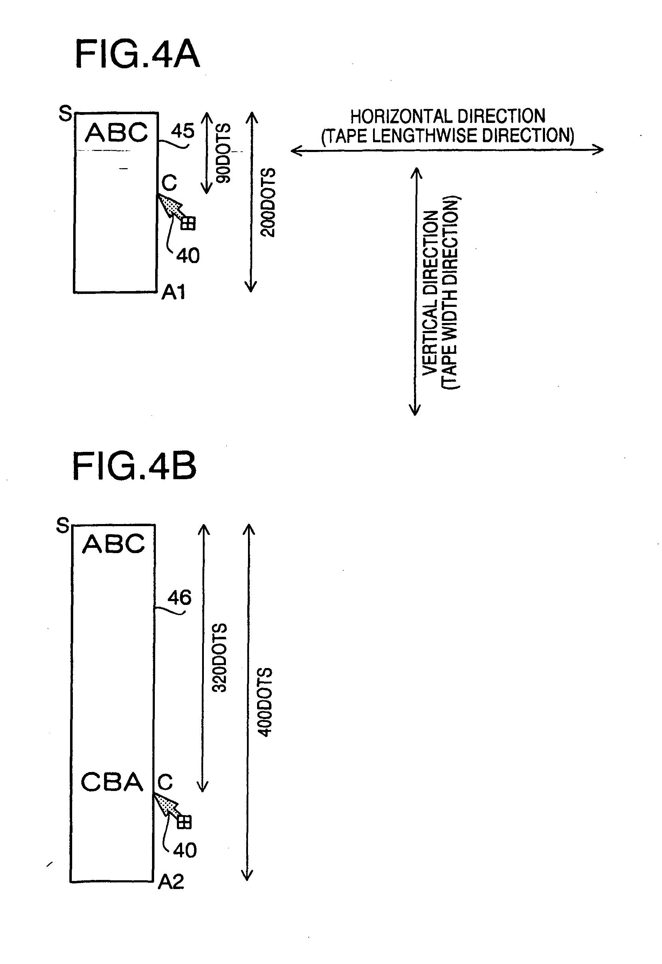

In the following, an example of the rectangular range specification in accordance with this embodiment will be described referring to Figs. 3A through 3C and Figs. 4A through 4C. Figs. 3A through 3C are schematic diagrams showing an example of the length adjustment of the rectangular range on the display according to the embodiment when the vertical tape setting is employed. Figs. 4A through 4C are schematic diagrams showing an example of the length adjustment of the rectangular range on the display according to the embodiment when the horizontal tape setting is employed.

In this embodiment, the adjusted dot size (i.e. the number of dots within the horizontal/vertical length of the rectangular range after the length adjustment) is limited to 200, 400, 800 and 1600 dots for the sake of simplicity of explanation. As a matter of course, the present invention is not to be restricted by the embodiment explained below.

First, the case of vertical tape setting will be explained. Fig. 3A shows a state in which a rectangular frame 41 has been displayed on the display 11 by setting the starting point S on the display 11 (by pressing the mouse button 13a with the mouse cursor 40 placed at a desired position) and moving the mouse cursor 40 to the lower right to the current point C (by dragging the mouse 13 pressing the mouse button 13a). In this case of vertical tape setting, the horizontal direction in Fig. 3A corresponds to the width direction of the tape (head arrangement direction) and the vertical direction in Fig. 3A (perpendicular to the horizontal direction) corresponds to the lengthwise direction of the tape. In the rectangular frame 41, letters "ABC" have been arranged in the horizontal direction. At this moment, the horizontal length of the rectangular frame 41 corresponds to 90 dots on the display 11.

If the Shift key of the keyboard 12 is pressed in the state shown in Fig. 3A, the specified range length adjustment unit 33 functions and thereby the horizontal length of the rectangular frame 41 is adjusted automatically. Specifically, the horizontal length of the rectangular frame 41 is adjusted to a length corresponding to a dot number that is an integral multiple or an integral submultiple integer of a preset dot number (800 dots) so that the difference between the dot number and the current dot number (90 dots) will be minimum. In this case, there is the aforementioned lower limit in the adjusted dot number, therefore, the rectangular frame's horizontal length is adjusted to a length corresponding to 200 dots. The result is shown in Fig. 3B. In Fig. 3B, the rectangular frame 41 of Fig. 3A has been modified into a rectangular frame 42 having the starting point S and an adjusted point A1 (110 dots to the right of the current point C) as the two diagonal points. In contrast, the position of the mouse cursor 40 is not changed and its tip remains on the current point C.

If the image data (in this embodiment, even text data such as "ABC" is printed as image data being displayed on the display 11) contained in the rectangular frame 42 is printed out when the horizontal length of the rectangular frame 42 corresponds to 200 dots on the display 11 as shown in Fig. 3B, the image data of 200 dots wide is enlarged to 800 dots wide for the printing, in which the correlation of dots between the image data displayed on the display 11 and the image data printed by the tape printing device 2 is made clear and simple. Therefore, by this embodiment, the print quality deterioration due to image enlargement can be avoided and thereby high quality print tape output can be obtained by the tape printing device 2.

In the state shown in Fig. 3B, if the user moves the mouse cursor 40 still further to the right pressing the Shift key in order to include the letters "CBA" (to the right of the letters "ABC") in the rectangular frame, when the horizontal length of the rectangular frame (whose diagonal line is formed by the starting point S and the current point C designated by the mouse cursor 40) exceeded a length corresponding to 300 dots on the display 11, the specified range length adjustment unit 33 automatically adjusts the rectangular frame's horizontal length to a length corresponding to 400 dots on the display 11 based on the aforementioned rules. Fig. 3C shows a state in which the mouse cursor 40 has been moved further to the right from the above point (where the above automatic length adjustment was carried out) by 20 dots, in which the rectangular frame 42 of Fig. 3B has been modified into a rectangular frame 43 having the starting point S and an adjusted point A2 (80 dots to the right of the current point C) as the two diagonal points. In contrast, the position of the mouse cursor 40 is not changed and its tip remains on the current point C. Also in this case where the image data of 400 dots wide is enlarged to 800 dots wide when the image data contained in the rectangular frame 43 is printed, the print quality deterioration due to image enlargement is avoided and thereby high quality print tape output can be obtained by the tape printing device 2.

Next, the case of horizontal tape setting will be explained. Fig. 4A shows a state in which the Shift key has been pressed after setting the starting point S on the display 11 (by pressing the mouse button 13a with the mouse cursor 40 placed at a desired position) and moving the mouse cursor 40 to the lower right to the current point C which is 90 dots lower than the starting point S (by dragging the mouse 13 pressing the mouse button 13a). In this case of horizontal tape setting, the horizontal direction in Fig. 4A corresponds to the lengthwise direction of the tape and the vertical direction in Fig. 4A (perpendicular to the horizontal direction) corresponds to the width direction of the tape (head arrangement direction).

If the Shift key is pressed, the specified range length adjustment unit 33 functions and thereby the vertical length of the rectangular frame (having a diagonal formed by the starting point S and the current point C) is adjusted automatically. Specifically, the vertical length of the rectangular frame is adjusted to a length corresponding to 200 dots based on the aforementioned rules. Therefore, a rectangular frame 45 having a diagonal formed by the starting point S and an adjusted point A1 (110 dots lower than the current point C) is shown in Fig. 4A. Also in this case, the position of the mouse cursor 40 is not changed and its tip remains on the current point C. In the rectangular frame 45, letters "ABC" have been arranged in the tape lengthwise direction. Also in this case, the image data of 200 dots wide is enlarged to 800 dots wide when the image data contained in the rectangular frame 45 is printed, by which the print quality deterioration due to image enlargement is avoided and print tape output of high quality can be obtained by the tape printing device 2.

In the state shown in Fig. 4A, if the user moves the mouse cursor 40 downward still further pressing the Shift key in order to include the letters "CBA" (below the letters "ABC") in the rectangular frame, when the vertical length of the rectangular frame (whose diagonal is formed by the starting point S and the current point C designated by the mouse cursor 40) exceeded a length corresponding to 300 dots on the display 11, the specified range length adjustment unit 33 automatically adjusts the rectangular frame's vertical length to a length corresponding to 400 dots on the display 11 based on the aforementioned rules. Fig. 4B shows a state in which the mouse cursor 40 has been moved further downward from the above point (where the above automatic length adjustment was carried out) by 20 dots, in which the rectangular frame 45 of Fig. 4A has been modified into a rectangular frame 46 having the starting point S and an adjusted point A2 (80 dots lower than the current point C) as the two diagonal points. In contrast, the position of the mouse cursor 40 is not changed and its tip remains on the current point C. Also in this case where the image data of 400 dots wide is enlarged to 800 dots wide when the image data contained in the rectangular frame 46 is printed, print tape output of high quality can be obtained by the tape printing device 2.

Similarly, when the mouse cursor 40 is moved further to the right (in the case of vertical tape setting) or further downward (in the case of horizontal tape setting), the rectangular frame displayed on the display 11 is automatically enlarged a little differently from the precise position of the mouse cursor 40, so that the distance on the display 11 between the starting point S and the current point C in the direction corresponding to the tape width direction will be 800 dots, 1600 dots, etc. (integral multiple of 800).

In this embodiment, in the case where the length (dot number) of the rectangular frame on the display 11 in the direction corresponding to the tape width direction is 800 dots, the frame dot number perfectly matches the printing dot number of the tape printing device 2. In this case, each dot of the image data displayed on the display 11 corresponds to each printing dot in a one-to-one correspondence, by which print tape output of very high quality can be obtained. In the case where the length (dot number) of the rectangular frame on the display 11 in the direction corresponding to the tape width direction is 1600 dots, the image deterioration hardly occurs since two adjacent dots displayed on the display 11 are handled as one printing dot by the tape printing device 2 (scaled down into an integral submultiple).

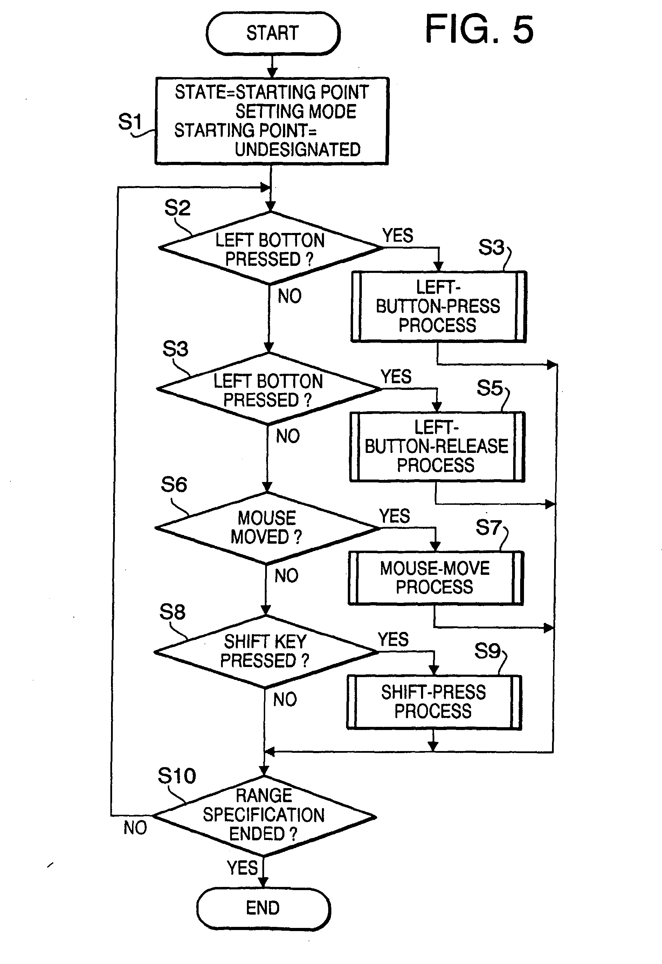

In the following, a concrete procedure of the range specification according to the embodiment will be described referring to Figs. 5 through 11. Figs. 5 through 11 are flow charts for explaining the range specification procedure according to the embodiment.

First, the mode storage unit 27 is preliminarily set to the starting point setting mode of the range specification state and the starting point is set to an undesignated state in step S1 of Fig. 5.

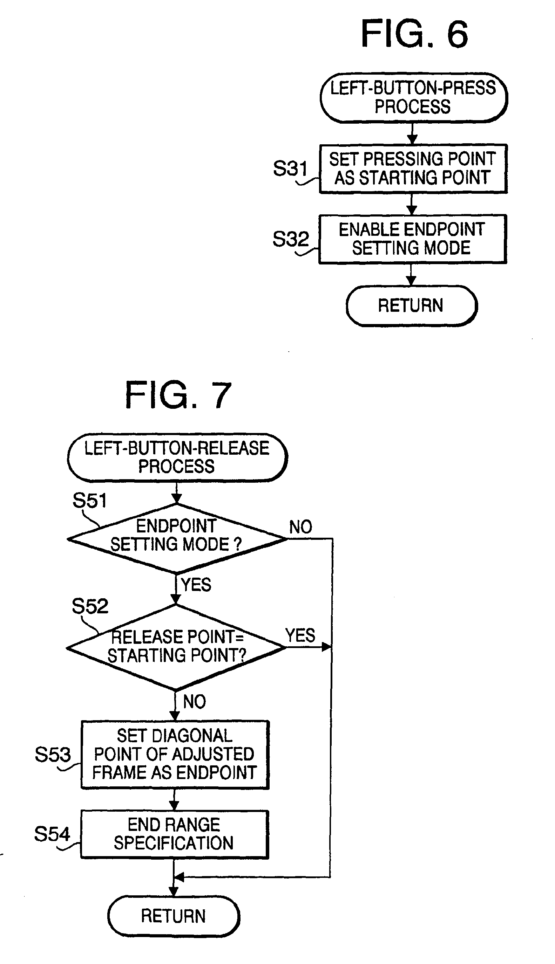

Subsequently, the judgment unit 23 judges whether the left button 13a of the mouse 13 has been pressed or not (step S2). If the left button 13a is judged to have been pressed (S2: YES), the process proceeds to step S3 and a "left-button-press process" which is shown in Fig. 6 is carried out. In step S31 of Fig. 6, the point at which the left button 13a was pressed is set as a first reference point (starting point), and the position of the first reference point is stored in the reference position storage unit 28. In step S32, the mode storage unit 27 is set to the endpoint setting mode and the left-button-press process is ended.

If the left button 13a is not judged to have been pressed in the step S2 (S2: NO), the process proceeds to step S4. In the step S4, the judgment unit 23 judges whether the left button 13a has been released or not. If the left button 13a is judged to have been released in the step S4 (S4: YES), the process proceeds to step S5 and a "left-button-release process" which is shown in Fig. 7 is carried out. In step S51 of Fig. 7, the judgment unit 23 judges whether the mode storage unit 27 has been set to the endpoint setting mode or not. If the endpoint setting mode has not been enabled (S51: NO), the left-button-release process of Fig. 7 is ended. If the endpoint setting mode has been enabled (S51: YES), the process proceeds to step S52.

In the step S52, the judgment unit 23 judges whether or not the point at which the left button 13a was released is the starting point which has been stored in the reference position storage unit 28. If the release point is judged to be the starting point (S52: YES), the left-button-release process of Fig. 7 is ended. If the release point is judged to be different from the starting point (S52: NO), it means that the mouse drag operation has been conducted by the user and the process proceeds to step S53. In the step S53, in the rectangular frame that has been adjusted by a procedure which will be explained later, a diagonal point opposite to the starting point S is set as a second reference point (endpoint) and the position of the second reference point is stored in the reference position storage unit 28. In step S54, the end of the range specification is recorded in the mode storage unit 27 and the left-button-release process is ended.

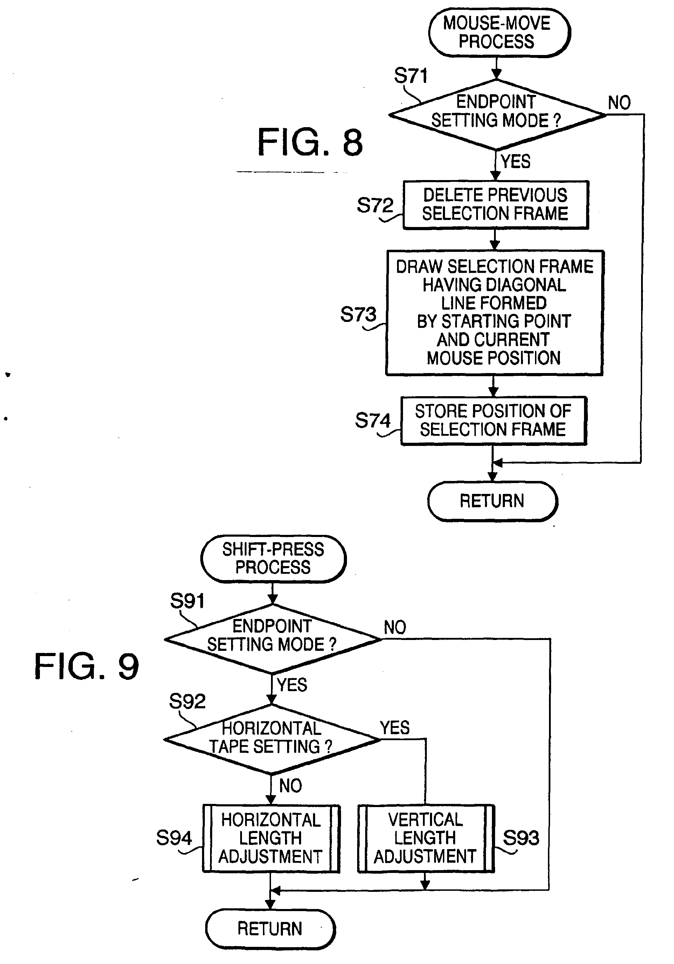

If the left button 13a is judged to have not been released in the step S4 (S4: NO), the process proceeds to step S6. In the step S6, the judgment unit 23 judges whether the mouse 13 has moved. If the mouse 13 is judged to have moved (S6: YES), the process proceeds to step S7 and a "mouse-move process" which is shown in Fig. 8 is carried out. In step S71 of Fig. 8, the judgment unit 23 refers to the mode storage unit 27 and judges whether the endpoint setting mode has been enabled or not. If the endpoint setting mode has not been enabled (S71: NO), it means that the starting point has not been set yet, and thus the mouse-move process is ended. If the endpoint setting mode has been enabled (S71: YES), the process proceeds to step S72.

In the step S72, data concerning the selection frame which have been stored in the selection frame storage unit 29 are deleted according to an instruction issued by the judgment unit 23. In the next step S73, the frame line display control unit 31 of the drawing control unit 24 draws a rectangular frame (whose diagonal line is formed by the starting point and the current position of the mouse cursor tip) on the display 11, and the cursor display control unit 32 changes the position of the mouse cursor displayed on the display 11 according to the direction and distance of the movement of the mouse 13. In step S74, the position of the rectangular frame is stored in the selection frame storage unit 29 and the mouse-move process is ended.

Referring back to Fig. 5, if the mouse 13 is judged to have not moved in the step S6 (S6: NO), the process proceeds to step S8 and the judgment unit 23 judges whether the Shift key of the keyboard 12 has been pressed or not. If the Shift key is judged to have been pressed (S8: YES), the process proceeds to step S9 and a "shift-press process" which is shown in Fig. 9 is carried out. In step S91 of Fig. 9, the judgment unit 23 refers to the mode storage unit 27 and judges whether the endpoint setting mode has been enabled or not. If the endpoint setting mode has not been enabled (S91: NO), the shift-press process of Fig. 9 is ended. If the endpoint setting mode has been enabled (S91: YES), the process proceeds to step S92.

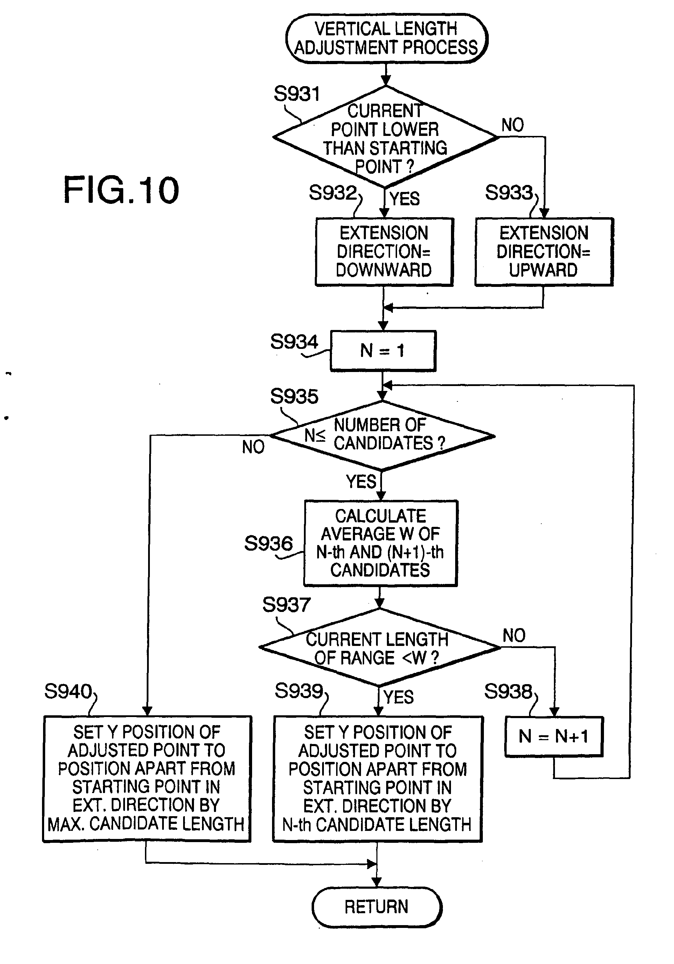

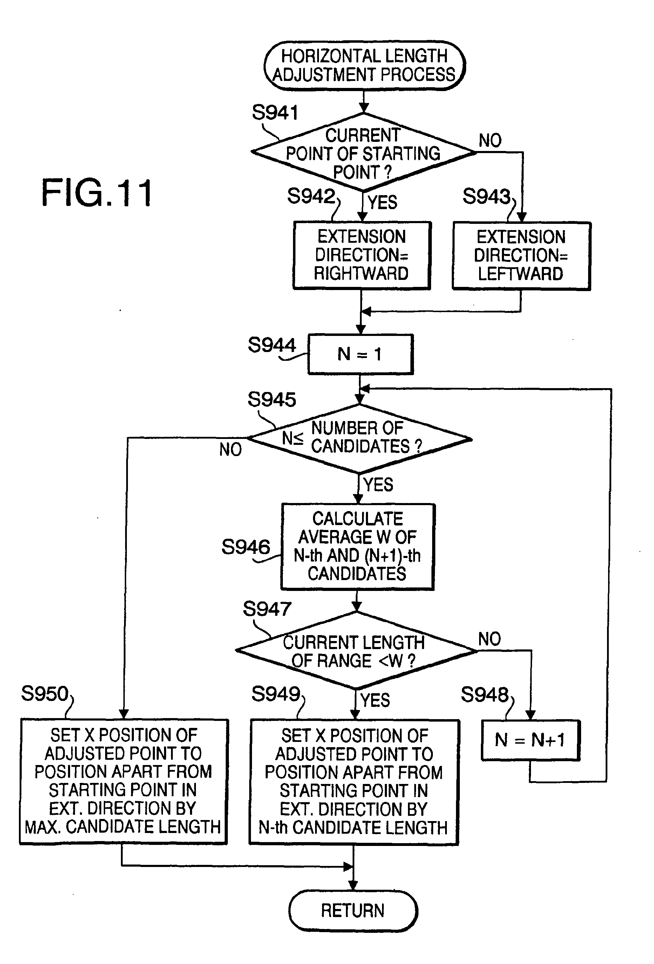

In the step S92, the judgment unit 23 judges whether the current tape setting is the vertical tape setting or the horizontal tape setting based on the memory contents of the tape orientation storage unit 26. In the case of horizontal tape setting (S92: YES), the process proceeds to step S93 and a "vertical length adjustment process" which is shown in Fig. 10 is carried out. In the case of vertical tape setting (S92: NO), the process proceeds to step S94 and a "horizontal length adjustment process" which is shown in Fig. 11 is carried out.

In the first step S931 of the vertical length adjustment process shown in Fig. 10, the specified range length adjustment unit 33 judges whether the current point (current position of the mouse cursor tip) is higher or lower on the screen than the starting point. If the current point is lower than the starting point (S931: YES), the process proceeds to step S932 and data indicating that the direction of extension of the rectangular frame relative to the starting point is downward is stored in the storage unit 34. On the other hand, if the current point is higher than the starting point (S931: NO), the process proceeds to step S933 and data indicating that the extension direction of the rectangular frame relative to the starting point is upward is stored in the storage unit 34.

In the next step S934, a parameter N for the length adjustment of the rectangular frame (indicating the optimum candidate of the number of dots which corresponds to the Length of the rectangular frame after the length adjustment) is set to 1 and the process proceeds to step S935. Incidentally, the parameters N = 1, 2, ·· in this example are assigned to the candidate dot numbers from the smallest one to the largest one (N = 1 corresponds to the smallest candidate dot number). The candidate dot numbers may preliminarily be stored in the storage unit 34 according to the printing dot number of the thermal head of the tape printing device 2. For example, in this embodiment in which the number of the thermal head's printing dots is 800, approximately four candidate dot numbers: 200, 400, 800 and 1600 may be preliminarily stored in the storage unit 34.

It is preferable if the setting of the optimum candidate dot number (optimum length) is carried out with proper adjustment so as to suit the current status of the screen, avoiding the protrusion of the rectangular frame from a display area of the image to be captured (an window in which the image is being displayed, the maximum display area of the display 11, or the maximum size of the image to be captured). Incidentally, the adjustment for avoiding the protrusion of the rectangular frame from the display area may also be carried out in another step (when the left button 13a of the mouse 13 is pressed, for example).

In the step S935, whether the current parameter N is within the number of candidates stored in the storage unit 34 or not is judged. If the current parameter N is within the number of candidates (S935: YES), the process proceeds to step S936. If the current parameter N exceeds the number of candidates (S935: NO), the process proceeds to step S940.

In the step S936, the specified range length adjustment unit 33 calculates the average W of a dot number (e.g. 200) corresponding to the current parameter N and a dot number (e.g. 400) corresponding to a parameter N+1. In the case where three candidate dot numbers (200, 400, 800) are stored in the storage unit 34, the averages W for the parameters N = 1 and N = 2 are 300 and 600, respectively.

In the next step S937, the specified range length adjustment unit 33 judges whether or not the vertical length of the rectangular frame (having the starting point and the current point as the diagonal points) on the display 11 is less than the average W obtained in the step S936. If the rectangular frame's vertical length is the average W or more (S937: NO), the process proceeds to step S938, in which the parameter N is incremented by 1 and the process is returned to the step S935. On the other hand, if the rectangular frame's vertical length is less than the average W (S937: YES), the process proceeds to step S939.

In the step S939, the vertical position (Y coordinate) of the adjusted point is set to a position that is apart from that of the starting point in the extension direction by the dot number corresponding to the parameter N, and the contents of the selection frame storage unit 29 is rewritten according to the result. The control by the frame line display control unit 31 of the drawing control unit 31 is conducted according to the contents of the selection frame storage unit 29, by which the selected rectangular frame being displayed on the display 11 is scaled up or down in the vertical direction. In contrast, the mouse cursor remains at the current point since the cursor display control unit 32 does not change the mouse cursor's position.

In the step S940, the vertical position (Y coordinate) of the adjusted point is set to a position that is apart from that of the starting point in the extension direction by the dot number (800 dots in this embodiment) corresponding to the maximum parameter N (3 in this embodiment), and the contents of the selection frame storage unit 29 is rewritten according to the result. The control by the frame line display control unit 31 of the drawing control unit 31 is conducted according to the contents of the selection frame storage unit 29, by which the selected rectangular frame being displayed on the display 11 is scaled up or down in the vertical direction. Also in this case, the mouse cursor remains at the current point since the cursor display control unit 32 does not change the mouse cursor's position.

Meanwhile, in the first step S941 of the horizontal length adjustment process shown in Fig. 11, the specified range length adjustment unit 33 judges whether the current point (current position of the mouse cursor tip) is at the right or left of the starting point. If the current point is at the right of the starting point (S941: YES), the process proceeds to step S942 and data indicating that the extension direction of the rectangular frame relative to the starting point is rightward is stored in the storage unit 34. On the other hand, if the current point is at the left of the starting point (S941: NO), the process proceeds to step S943 and data indicating that the extension direction of the rectangular frame relative to the starting point is leftward is stored in the storage unit 34.

In the next step S944, the aforementioned parameter N is set to 1 and the process proceeds to step S945. In the step S945, whether the current parameter N is within the number of candidates stored in the storage unit 34 or not is judged. If the current parameter N is within the number of candidates (S945: YES), the process proceeds to step S946. If the current parameter N exceeds the number of candidates (S945: NO), the process proceeds to step S950.

In the step S946, the specified range length adjustment unit 33 calculates the average W of a dot number corresponding to the current parameter N and a dot number corresponding to a parameter N+1. In the next step S947, the specified range length adjustment unit 33 judges whether or not the horizontal length of the rectangular frame (having the starting point and the current point as the diagonal points) on the display 11 is less than the average W obtained in the step S946. If the rectangular frame's horizontal length is the average W or more (S947: NO), the process proceeds to step S948, in which the parameter N is incremented by 1 and the process is returned to the step S945. On the other hand, if the rectangular frame's horizontal length is less than the average W (S947: YES), the process proceeds to step S949.

In the step S949, the horizontal position (X coordinate) of the adjusted point is set to a position that is apart from that of the starting point in the extension direction by the dot number corresponding to the parameter N, and the contents of the selection frame storage unit 29 is rewritten according to the result. The control by the frame line display control unit 31 of the drawing control unit 31 is conducted according to the contents of the selection frame storage unit 29, by which the selected rectangular frame being displayed on the display 11 is scaled up or down in the horizontal direction. In contrast, the mouse cursor remains at the current point since the cursor display control unit 32 does not change the mouse cursor's position.

In the step S950, the horizontal position (X coordinate) of the adjusted point is set to a position that is apart from that of the starting point in the extension direction by the dot number (800 dots in this embodiment) corresponding to the maximum parameter N, and the contents of the selection frame storage unit 29 is rewritten according to the result. The control by the frame line display control unit 31 of the drawing control unit 31 is conducted according to the contents of the selection frame storage unit 29, by which the selected rectangular frame being displayed on the display 11 is scaled up or down in the horizontal direction. Also in this case, the mouse cursor remains at the current point since the cursor display control unit 32 does not change the mouse cursor's position.

After the vertical length adjustment process (step S93) or the horizontal length adjustment process (step S94) is finished as above, the process is returned to step S10 of Fig. 5, in which the judgment unit 23 judges whether or not the mode storage unit 27 is indicating that the range specification has ended. The process of Fig. 5 proceeds to the step S10 also when the Shift key is judged to have not been pressed in the step S8 (S8: NO).

If the mode storage unit 27 is not indicating the end of range specification in the step S10 (S10: NO), the process is returned to the step S2 and the same process is repeated. If the mode storage unit 27 is indicating the end of range specification in the step S10 (S10: YES), the range specification process according to this embodiment is ended, and data inside the specified range is supplied to the tape editor if image capturing has been enabled. Thereafter, the print control unit 25 is activated manually by the user operating the tape editor or automatically by the supply of the data of the specified range to the tape editor.

The print control unit 25 carries out print control for the image data inside the rectangular frame so that the length of the specified range (surrounded by the rectangular frame drawn and adjusted by the above procedure) in the direction corresponding to the tape width direction (vertical direction in the horizontal tape setting, horizontal direction in the vertical tape setting) will be printed in (or scaled up/down in printing to) a length corresponding to the printing dot number (800 dots) of the thermal head of the tape printing device 2. By virtue of the procedure which has been explained above, the data contained in the rectangular frame is printed by the tape printing device 2 with high quality.

In the following, the above flow will be explained more concretely taking specific examples. In the case of the vertical tape setting (Figs. 3A through 3C), the process of Fig. 5 first proceeds to the mouse-move process of the step S7 via the steps S2, S4 and S6 since the tip of the mouse cursor 40 is first moved to a position to become the starting point S of the rectangular range. Since it is in the starting point setting mode in the step S71, the mouse-move process is ended and the process is returned to the step S2 via the step S10.

When the user presses the left button 13a of the mouse 13 with the mouse cursor tip located at the position to become the starting point S of the rectangular range, the process proceeds to the step S3 via the step S2. In the step S3, the steps S31 and S32 are carried out, by which the pressing point (the point at which the left button 13a was pressed) is set as the starting point S and the mode storage unit 27 is set to the endpoint setting mode. Thereafter, the process is returned to the step S2 via the step S10.

Next, since the mouse 13 is moved (dragged) with its left button 13a pressed, the process proceeds to the step S7 via the steps S2, S4 and S6. In the step S7, the steps S71, S72, S73 and S74 are carried out, by which the rectangular frame 41 (whose diagonal line is formed by the starting point S and the current position C of the mouse cursor tip) is drawn and the position of the rectangular frame 41 is stored.

When the user presses the Shift key, the process proceeds to the step S9 via the steps S2, S4, S6 and S8. In the step S9, the steps S91, S92 and S94 are carried out, by which the horizontal length of the rectangular frame is adjusted in the horizontal length adjustment process based on the aforementioned rules and thereby the adjusted rectangular frame 42 or 43 is drawn on the display 11.

When the user releases the left button 13a of the mouse 13, the process proceeds to the step S5 via the steps S2 and S4. In the step S5, the steps S51, S52, S53 and S54 are carried out, by which a diagonal point of the adjusted rectangular frame opposite to the starting point S is set as the endpoint. Thereafter, the range specification is judged to have finished in the step S10, and the range specification process is ended.

As explained above, by the embodiment, the Length (horizontal or vertical length) of the rectangular frame is adjusted so that the number of display dots within the Length will be an integral multiple or an integral submultiple integer (an integer that is an integral submultiple) of the number of printing dots (800 dots) of the thermal head of the tape printing device 2, and the print control for the rectangular frame 42 or 43 is conducted so that data within the Length will be printed in a length corresponding to 800 dots. Therefore, the correlation between the dots within the Length of the rectangular frame 42 or 43 and the printing dots becomes clear and simple at the stage of the print control, by which print output of higher quality can be obtained. Further, the length adjustment for the rectangular frame is conducted only by pressing the Shift key, without the need of complex operation by the user.

While a particular illustrative preferred embodiment in accordance with the present invention has been described above, the present invention is not to be restricted by the above embodiment. For example, while the length adjustment of the rectangular frame was conducted by use of the averages W of candidate dot numbers as threshold values for comparison in the above embodiment, the length adjustment can also be conducted using the candidate dot numbers themselves as the threshold values. While the above embodiment assumed black and white printing or color printing by stacking up black and white printings, when color printing is carried out by dithering each dot on the display (using a 4-dot dither matrix (2x2), for example), it is preferable that the size of the dither matrix be taken into consideration. In the case where the 4-dot dither matrix (2x2) is used, it is desirable that the length adjustment of the rectangular frame be carried out so that the number of display dots within the horizontal or vertical length of the range surrounded by the rectangular frame will be an even-number multiple or an even-number submultiple integer (an integer that is an even-number submultiple) of the number of printing dots (800 dots) of the thermal head of the tape printing device 2.

The input device used for the range specification is not limited to a mouse but various pointing devices such as a track ball, joy stick, tablet and touch panel, the cursor keys of the keyboard, etc. can also be used. Further, the present invention is applicable not only to personal computers but also to range specification on the display of various devices such as cellular phones.

Incidentally, while the number of display dots within the length of the range (surrounded by the rectangular frame) in the horizontal or vertical direction corresponding to the tape width direction (head arrangement direction) was adjusted in the above embodiment, the print quality can also be improved by adjusting the number of display dots within the length of the range (surrounded by the rectangular frame) in the vertical or horizontal direction corresponding to the tape lengthwise direction (perpendicular to the head arrangement direction). However, the employment of the direction corresponding to the printing head arrangement direction as in the above embodiment is advantageous in that mechanical deviation of the dots within the specified range's length in the direction from the printed dots can be eliminated and thereby higher print quality can be realized.

It is also possible to carry out the length adjustment (dot number adjustment) for both the horizontal and vertical direction of the rectangular frame, by which the whole of the selected image can be printed with still higher quality when a printing device employing cut-sheets, fixed-form sheets, etc. is used.

While printing was taken as an example of the output process in the above embodiment, the application of the present invention is not to be limited to the printing process. The present invention is also applicable to various output processes such as display output.

While the shape of the specified range was rectangular in the above embodiment, the present invention can also be applied to cases where the range is specified in various shapes such as a circle, polygon, star shape, heart shape, etc.

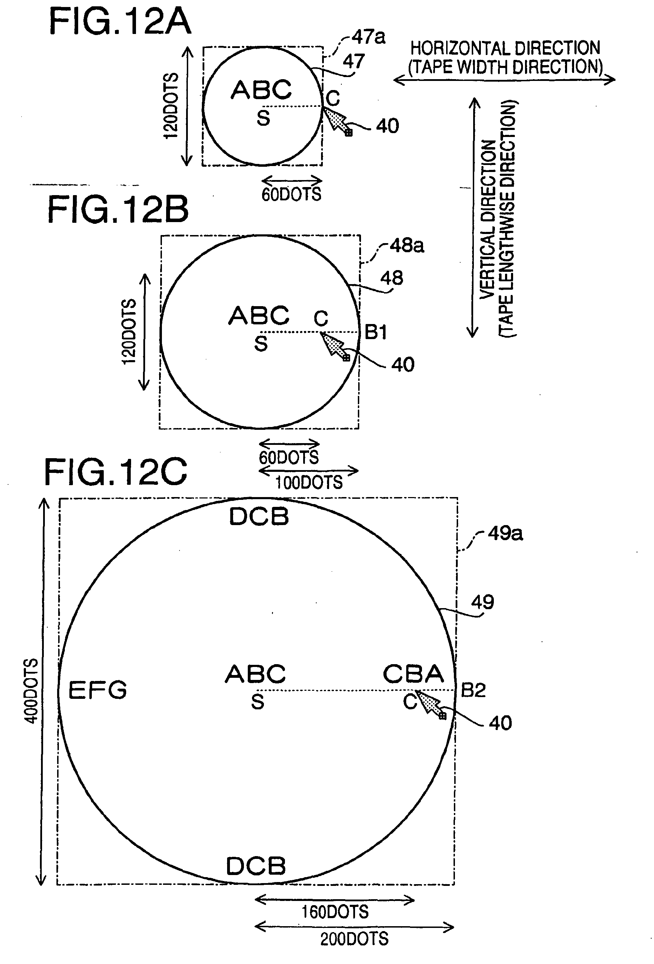

A specific example employing the circular range specification will be described below. Fig. 12A shows a state in which a circular frame 47 (whose center is designated by a starting point S and whose radius is designated by a line segment S-C) has been displayed on the display 11 by setting the starting point S on the display 11 (by pressing the mouse button 13a with the mouse cursor 40 placed at a desired position) and moving the mouse cursor 40 to the right to the current point C (by dragging the mouse 13 pressing the mouse button 13a). In this case employing the vertical tape setting, the horizontal direction in Fig. 12A corresponds to the width direction of the tape (head arrangement direction) and the vertical direction in Fig. 12A (perpendicular to the horizontal direction) corresponds to the tape lengthwise direction. In the circular frame 47, letters "ABC" have been arranged in the horizontal direction. At this moment, the radius of the circular frame 47 corresponds to 60 dots on the display 11, and the dimensions of the circular frame 47 in the tape lengthwise direction and the tape width direction (dimensions of a rectangle 47a circumscribing the circular frame 47 and having sides parallel to the tape lengthwise direction and the tape width direction) correspond to 120 dots on the display 11.

If the Shift key of the keyboard 12 is pressed in the state shown in Fig. 12A, the specified range length adjustment unit 33 functions and thereby the radius of the circular frame 47 is adjusted automatically. Specifically, the horizontal length of the rectangle 48a circumscribing the circular frame is adjusted to a length corresponding to a dot number that is an integral multiple or an integral submultiple integer of 800 dots so that the difference between the dot number and the current dot number (120 dots) will be minimum. In this case, the rectangle's horizontal length is adjusted to a length corresponding to 200 dots (lower limit), by which the radius is adjusted to a length corresponding to 100 dots. The result is shown in Fig. 12B. In Fig. 12B, the circular frame 41 of Fig. 12A has been modified into a circular frame 48 having a radius designated by the starting point S and an adjusted point B1 (40 dots farther than the current point C from the starting point S). In contrast, the position of the mouse cursor 40 is not changed and its tip remains on the current point C.

If the image data (in this embodiment, even text data such as "ABC" is printed as image data being displayed on the display 11) contained in the circular frame 48 is printed out when the horizontal length of the rectangle 48a circumscribing the circular frame 48 corresponds to 200 dots on the display 11 as shown in Fig. 12B, the image data of 200 dots wide is enlarged to 800 dots wide for the printing, in which the correlation of dots between the image data displayed on the display 11 and the image data printed by the tape printing device 2 is made clear and simple. Therefore, also by this embodiment, the print quality deterioration due to image enlargement is avoided and thereby high quality print tape output can be obtained by the tape printing device 2, similarly to the previous embodiment.

In the state shown in Fig. 12B, if the user moves the mouse cursor 40 still further to the right pressing the Shift key in order to include the letters "CBA" etc. (outside of the letters "ABC") in the circular frame, when the horizontal length of the rectangle circumscribing the circular frame (whose radius is formed by the starting point S and the current point C set by the mouse cursor 40) exceeded a length corresponding to 300 dots on the display 11, the specified range length adjustment unit 33 automatically adjusts the rectangle's horizontal length to a length corresponding to 400 dots on the display 11 based on the aforementioned rules, by which the radius of the circular frame is adjusted to a length corresponding to 200 dots. Fig. 12C shows a state in which the mouse cursor 40 has been moved further to the right from the above point (where the above automatic length adjustment was carried out) by 10 dots, in which the circular frame 48 of Fig. 12B has been modified into a circular frame 49 whose radius is formed by the starting point S and an adjusted point B2 (40 dots to the right of the current point C). In contrast, the position of the mouse cursor 40 is not changed and its tip remains on the current point C. Also in this case where the image data of 400 dots wide is enlarged to 800 dots wide when the image data contained in the circular frame 49 is printed, the print quality deterioration due to image enlargement is avoided and thereby print tape output of high quality can be obtained by the tape printing device 2.

Although not shown, when the mouse cursor 40 is moved further to the right in the case of vertical tape setting, the circular frame displayed on the display 11 is automatically enlarged (by adjusting its radius) a little differently from the precise position of the mouse cursor 40, so that the length of the rectangle circumscribing the circular frame in the direction corresponding to the tape width direction will be 800 dots, 1600 dots, etc. (integral multiple of 800).

In this embodiment, in the case where the length (dot number) of the circular frame (more precisely, the rectangle circumscribing the circular frame) on the display 11 in the direction corresponding to the tape width direction is 800 dots, the frame dot number perfectly matches the printing dot number of the tape printing device 2. In this case, each dot of the image data displayed on the display 11 corresponds to each printing dot in a one-to-one correspondence, by which print tape output of very high quality can be obtained. In the case where the length (dot number) of the rectangle on the display 11 in the direction corresponding to the tape width direction is 1600 dots, the image deterioration hardly occurs since two adjacent dots displayed on the display 11 are handled as one printing dot by the tape printing device 2 (scaled down into an integral submultiple).

Also in the case of horizontal tape setting, the length adjustment process is carried out similarly although detailed explanation thereof is omitted here. In the horizontal tape setting, the radius of the circular frame is adjusted so that the vertical length of the rectangle circumscribing the circular frame will be a length corresponding to a dot number that is an integral multiple or an integral submultiple integer of 800 dots and the difference between the dot number and the current dot number will be minimum.

Incidentally, while the circular frame and its radius were specified in the above embodiment by moving the mouse cursor 40 from the starting point S to the right, the "right" direction was employed for the sake of simple explanation and the direction of mouse operation is of course not limited to the right. The circular frame can be specified in any case by using the distance between the starting point S and the current point C as its radius.

In the case of the circular frame, the dimension and shape in the horizontal direction are identical with those in the vertical direction. Therefore, the length adjustment process can also be conducted simply paying attention to the radius (the distance between the starting point S and the current point C), by adjusting the diameter of the circular frame (twice the distance S-C) to a length corresponding to an integral multiple or an integral submultiple integer of 800 dots.

Further, while the length adjustment process was conducted by adjusting the radius of the circular frame in the above embodiment, a modified embodiment adjusting the sizes in the tape lengthwise direction and the tape width direction independently is also possible. In other words, a frame whose length in the tape width direction is optimally adjusted and whose length in the tape lengthwise direction is set freely (elliptic frame) can also be employed.

In addition, while the circular frame was taken as an example in the above explanation, the length adjustment process can also be conducted in similar ways for frames of various shapes (polygon, star shape, heart shape, etc.), by assuming a rectangle that circumscribes or closely surrounds the frame and adjusting the size (optimum length) of the frame so that the length of the rectangle in the tape width direction will be a length corresponding to a dot number that is an integral multiple or an integral submultiple integer of 800 dots and the difference between the dot number and the current dot number will be minimum.

### INDUSTRIAL APPLICABILITY

As described above, by the present invention, when printing is carried out so that the length of a range (surrounded by a frame line) in at least one of the width direction and lengthwise direction will be printed in (or scaled up/down in printing to) a predetermined length corresponding to a preset dot number, the print control is carried out after the length (horizontal or vertical length) of the specified range has been scaled up or down so that the number of display dots of the image (captured from the display area by the range specification) in the aforementioned direction will be an integral multiple or an integral submultiple integer of the preset dot number. Therefore, the correlation between the dots within the length of the specified range in the direction and the printing dots becomes clear and simple at the stage of the print control, by which print output of higher quality can be obtained.

## Claims

1. A range specification device (I) to be used for obtaining an output specifying an arbitrary range of image information being displayed on a display area of a display device (II) and developing image data contained in the specified range on an output area of desired size, comprising:
setting means (26,27) by which at least one of a width direction length and a lengthwise direction length of a desired output area of a printing device can be set, the at least one length corresponding to a preset dot number in a respective direction;
pointer display control means (32) for displaying a pointer, indicating any designated position in the display area, in the display area;
input means (13,22) by which a desired selection range can be specified in the display area based on the display of the pointer;
selection range display control means (31) for recognizably displaying the selection range specified by said input means in the display area; and
specified range length adjustment means (33) for modifying the specified selection range by adjusting at least one of a width direction length and a lengthwise direction length of the selection range so as to adjust the number of display dots contained in the length, including:
means for detecting at least one of the width direction length and the lengthwise direction length of the selection range which has been specified by the pointer;
means for comparing the detected length of the selection range with the set length of the output area and obtaining a length that is an integral multiple or an integral submultiple integer of the length of the output area and that is the nearest to the detected length among such lengths; and
means for receiving a predetermined input and modifying at least one of the width direction length and the lengthwise direction length of the selection range to the obtained length in response to the predetermined input.

2. The range specification device according to claim 1, further comprising:
data capturing means for capturing image data contained in the selection range which has been modified by said specified range length adjustment means;
image adjustment means for scaling up or down the image data captured by said data capturing means so that the width direction length or the lengthwise direction length in the image data will be outputted in a proper length corresponding to the preset dot number; and
output control means for carrying out control for outputting the image data processed by said image adjustment means, preferably conducting control for outputting the specified selection range by printing by use of a printing head.

3. The range specification device according to claim 1 or 2, wherein said preset dot number is set based on the resolution of the printing head and the maximum printing width or maximum printing length of a sheet on which the printing is carried out.

4. The range specification device according to one of claims 1 to 3, wherein said direction of the selection range in which the adjustment is carried out is a direction in the display area of the display device corresponding to a head arrangement direction of the printing head.

5. The range specification device according to one of claims 1 to 4, wherein said selection range display control means displays the selection range in the display area by displaying a rectangular frame whose diagonal positions are specified by two points designated in the display area, or by displaying a circular frame whose center is specified by one of two designated points in the display area and whose radius is specified by the distance between the two designated points.

6. The range specification device according to one of claims 1 to 5, wherein if the size of the selection range as the result of the length adjustment exceeds that of the image information itself, said specified range length adjustment means does not conduct the length adjustment to the size, or exceeds that of the maximum display area of the display device, said specified range length adjustment means does not conduct the length adjustment to the size.

7. A range specification method to be used for obtaining an output by specifying an arbitrary range of image information being displayed on a display area of a display device and developing image data contained in the specified range on an output area of desired size, comprising the steps of:
setting at least one of a width direction length and a lengthwise direction length of a desired output area of a printing device, the at least one length corresponding to a preset printing dot number in a respective direction;
specifying a desired selection range in the display area based on the display of a pointer which indicates any designated position in the display area;
recognizably displaying the selection range specified by the above step in the display area;
detecting at least one of a width direction length and a lengthwise direction length of the selection range which has been specified by use of the pointer;
comparing the detected length of the selection range with the set length of the output area and obtaining a length that is an integral multiple or an integral submultiple integer of the length of the output area and that is the nearest to the detected length among such lengths; and
receiving a predetermined input and modifying at least one of the width direction length and the lengthwise direction length of the selection range to the obtained length in response to the predetermined input.

8. The range specification method according to claim 7, further comprising the steps of:
capturing image data contained in the selection range which has been modified by specified range length adjustment means;
scaling up or down the image data captured in the above step so that the width direction length or the lengthwise direction length in the image data will be outputted in a proper length corresponding to the preset dot number; and
carrying out control for outputting the processed image data.

9. A computer-readable record medium storing a program for the execution of the range specification method according to one of claims 7 or 8.

## Patentansprüche

1. Eine Bereichsangabevorrichtung (1), die zu verwenden bestimmt ist, um eine Ausgabe zu ermitteln, indem ein beliebiger Bereich von Bildinformationen angegeben wird, die auf einer Anzeigefläche einer Anzeigevorrichtung (11) dargestellt werden, und indem die im angegebenen Bereich enthaltenen Bilddaten auf einer Ausgabefläche gewünschter Größe entwickelt werden, umfassend:
ein Einstellmittel (26, 27), durch welches wenigstens eine der Längen der Querrichtung oder der Längsrichtung einer gewünschten Ausgabefläche einer Druckvorrichtung eingestellt werden kann, wobei die wenigstens eine Länge einer voreingestellten Anzahl von Rasterpunkten in der entsprechenden Richtung entspricht;
ein Steuermittel (32) für die Zeigerwiedergabe zum Anzeigen eines Zeigers in der Anzeigefläche, welcher eine beliebig bestimmte Position in der Anzeigefläche bezeichnet;
ein Eingabemittel (13,22), durch welches ein gewünschter Auswahlbereich in der Anzeigefläche auf Grundlage der Anzeige des Zeigers ausgewählt werden kann;
ein Steuermittel (31) für die Auswahlbereichswiedergabe zum erfassbaren Anzeigen des durch das Eingabemittel angegebenen Auswahlbereichs in der Anzeigefläche; und
Justagemittel (33) für die angegebene Bereichslänge zum Ändern des angegebenen Auswahlbereichs durch Anpassen wenigstens einer der Längen der Querrichtung oder der Längsrichtung des Auswahlbereichs, so dass die Anzahl der in der Länge enthaltenen Bildrasterpunkte angepasst wird, mit:
einem Mittel zum Detektieren wenigstens einer der Längen der Querrichtung oder der Längsrichtung des Auswahlbereichs, der durch den Zeiger angegeben wurde;
Mittel zum Vergleichen der detektierten Länge des Auswahlbereichs mit der eingestellten Länge der Ausgabefläche und zum Ermitteln einer Länge, die ein ganzzahliges Vielfaches oder die ein ganzzahliger Teiler der Länge der Ausgabefläche ist und die der detektierten Länge unter solchen Längen am nächsten ist; und
Mittel zum Empfangen einer vorbestimmten Eingabe und zum Ändern wenigstens einer der Längen der Querrichtung oder der Längsrichtung des Auswahlbereichs auf die ermittelte Länge in Reaktion auf die vorbestimmte Eingabe.

2. Die Bereichsangabevorrichtung gemäß Anspruch 1, ferner umfassend:
Datenaufnahmemittel zum Aufnehmen von in dem Auswahlbereich, welcher durch das Justagemittel für die angegebene Bereichslänge geändert wurde, enthaltenen Bilddaten;
Bildjustagemittel zum hoch- oder herunterskalieren der durch das Datenaufnahmemittel aufgenommenen Bilddaten, so dass die Länge der Querrichtung oder die Länge der Längsrichtung in den Bilddaten als eine der voreingestellten Anzahl von Rasterpunkten entsprechenden, passenden Länge ausgegeben wird; und
Ausgabesteuermittel zum Ausführen einer Steuerung der Ausgabe der durch das Bildjustagemittel verarbeiteten Bilddaten, wobei bevorzugt eine Steuerung der Ausgabe des angegebenen Auswahlbereichs mittels Drucken unter Verwendung eines Druckkopfs durchgeführt wird.

3. Die Bereichsangabevorrichtung gemäß Anspruch 1 oder 2, wobei die voreingestellte Anzahl von Rasterpunkten auf der Grundlage der Auflösung des Druckkopfs und der maximalen Druckbreite oder der maximalen Drucklänge eines Blatts, auf dem der Druck durchgeführt wird, eingestellt wird.

4. Die Bereichsangabevorrichtung gemäß einem der Ansprüche 1 bis 3, wobei die Richtung des Auswahlbereichs, in welcher das Nachstellen durchgeführt wird, eine Richtung in der Anzeigefläche der Anzeigevorrichtung ist, die einer Anordnungsrichtung des Druckkopfs entspricht.

5. Die Bereichsangabevorrichtung gemäß einem der Ansprüche 1 bis 4, wobei das Steuermittel für die Wiedergabe des Auswahlbereichs den Auswahlbereich in der Anzeigefläche durch die Wiedergabe eines rechteckförmigen Rahmens, dessen diagonale Positionen durch zwei in der Anzeigefläche bestimmte Punkte angegeben sind, oder durch die Wiedergabe eines kreisförmigen Rahmens anzeigt, dessen Mitte durch einen Punkt von zwei in der Anzeigefläche bestimmten Punkten angegeben ist und dessen Radius durch den Abstand zwischen den zwei bestimmten Punkten angegeben ist.

6. Die Bereichsangabevorrichtung gemäß einem der Ansprüche 1 bis 5, wobei, wenn die Größe des Auswahlbereichs als Ergebnis der Längennachstellung diejenige der Bildinformationen selbst übertrifft, das Justagemittel für die angegebene Bereichslänge nicht die Längenjustage auf die Größe vornimmt, oder, wenn die Größe des Auswahlbereichs als Ergebnis der Längennachstellung diejenige der maximalen Anzeigefläche der Anzeigevorrichtung übersteigt, das Justagemittel für die angegebene Bereichslänge nicht die Längenjustage auf die Größe vornimmt.

7. Ein Bereichsangabeverfahren, das zu verwenden bestimmt ist, um eine Ausgabe zu ermitteln, indem ein beliebiger Bereich von Bildinformationen angegeben wird, die auf einer Anzeigefläche einer Anzeigevorrichtung dargestellt werden, und indem die in dem angegebenen Bereich enthaltenen Bilddaten auf einer Ausgabefläche gewünschter Größe entwickelt werden, umfassend:
Einstellen wenigstens einer der Längen der Querrichtung oder der Längsrichtung einer gewünschten Ausgabefläche einer Druckvorrichtung, wobei die wenigstens eine Länge einer voreingestellten Anzahl von Rasterpunkten in der entsprechenden Richtung entspricht;
Angeben eines gewünschten Auswahlbereichs auf Grundlage der Anzeige eines Zeigers, der eine beliebig bestimmte Position in der Anzeigefläche bezeichnet;
Erfassbares Anzeigen des im obigen Schritt angegebenen Auswahlbereichs in der Anzeigefläche;
Detektieren wenigstens einer der Längen der Querrichtung oder der Längsrichtung des Auswahlbereichs, der durch Verwendung des Zeigers angegeben wurde;
Vergleichen der detektierten Länge des Auswahlbereichs mit der eingestellten Länge der Ausgabefläche und Ermitteln einer Länge, die ein ganzzahliges Vielfaches oder die ein ganzzahliger Teiler der Länge der Ausgabefläche ist und die der detektierten Länge unter solchen Längen am nächsten ist; und
Empfangen einer vorbestimmten Eingabe und Ändern wenigstens einer der Längen der Querrichtung oder der Längsrichtung des Auswahlbereichs auf die ermittelte Länge in Reaktion auf die vorbestimmte Eingabe.

8. Das Bereichsangabeverfahren gemäß Anspruch 7, ferner die folgenden Schritte umfassend:
Aufnehmen von in dem Auswahlbereich, welcher durch das Justagemittel für die angegebene Bereichslänge geändert wurde, enthaltenen Bilddaten;
Hoch- oder Herunterskalieren der durch das Datenaufnahmemittel aufgenommenen Bilddaten, so dass die Länge der Querrichtung oder die Länge der Längsrichtung in den Bilddaten als eine der voreingestellten Anzahl von Rasterpunkten entsprechenden, passenden Länge ausgegeben wird; und
Ausführen einer Steuerung zur Ausgabe der verarbeiteten Bilddaten.

9. Ein Computer-lesbares Aufzeichnungsmedium, das ein Programm zur Ausführung des Bereichsangabeverfahrens gemäß einem der Ansprüche 7 oder 8 speichert.

## Revendications

1. Dispositif de spécification de plage (1) à utiliser pour obtenir une sortie spécifiant une plage arbitraire d'informations d'image affichées dans une région d'affichage d'un dispositif d'affichage (11) et développer des données d'image contenues dans la plage spécifiée dans une région de sortie de taille souhaitée, comprenant :
des moyens de détermination (26, 27) par lesquels au moins l'une d'une longueur dans la direction de largeur et d'une longueur dans la direction de longueur d'une région de sortie souhaitée d'un dispositif d'impression peut être déterminée, ladite au moins une longueur correspondant à un nombre de points prédéterminé dans une direction respective ;
des moyens de commande d'affichage de pointeur (32) pour afficher un pointeur, indiquant n'importe quelle position désignée dans la région d'affichage, dans la région d'affichage ;
des moyens d'entrée (13, 22) par lesquels une plage de sélection souhaitée peut être spécifiée dans la région d'affichage sur la base de l'affichage du pointeur ;
des moyens de commande d'affichage de plage de sélection (31) pour afficher de manière reconnaissable la plage de sélection spécifiée par lesdits moyens d'entrée dans la région d'affichage ; et
des moyens d'ajustement de longueur de plage spécifiée (33) pour modifier la plage de sélection spécifiée en ajustant au moins l'une d'une longueur dans la direction de largeur et d'une longueur dans la direction de longueur de la plage de sélection de manière à ajuster le nombre de points d'affichage contenus dans la longueur, comprenant :
des moyens pour détecter au moins l'une de la longueur dans la direction de largeur et de la longueur dans la direction de longueur de la plage de sélection qui a été spécifiée par le pointeur ;
des moyens pour comparer la longueur détectée de la plage de sélection avec la longueur déterminée de la région de sortie et pour obtenir une longueur qui est un multiple entier ou un sous-multiple entier de la longueur de la région de sortie et qui est la plus proche de la longueur détectée parmi ces longueurs ; et
des moyens pour recevoir une entrée prédéterminée et changer au moins l'une de la longueur dans la direction de largeur et de la longueur dans la direction de longueur de la plage de sélection en la longueur obtenue en réponse à l'entrée prédéterminée.

2. Dispositif de spécification de plage selon la revendication 1, comprenant en outre :
des moyens de capture de données pour capturer des données d'image contenues dans la plage de sélection qui a été modifiée par lesdits moyens d'ajustement de longueur de plage spécifiée ;
des moyens d'ajustement d'image pour augmenter ou réduire proportionnellement les données d'image capturées par lesdits moyens de capture de données de sorte que la longueur dans la direction de largeur ou la longueur dans la direction de longueur des données d'image soit délivrée à une longueur correcte correspondant au nombre de points prédéterminé ; et
des moyens de commande de sortie pour exécuter une commande pour délivrer les données d'image traitées par lesdits moyens d'ajustement d'image, de préférence exécuter une commande pour délivrer la plage de sélection spécifiée par une impression en utilisant une tête d'impression.

3. Dispositif de spécification de plage selon la revendication 1 ou 2, dans lequel ledit nombre de points prédéterminé est fixé sur la base de la résolution de la tête d'impression et de la largeur d'impression maximum ou de la longueur d'impression maximum d'une feuille sur laquelle l'impression est effectuée.

4. Dispositif de spécification de plage selon l'une des revendications 1 à 3, dans lequel ladite direction de la plage de sélection dans laquelle l'ajustement est effectué est une direction dans la région d'affichage du dispositif d'affichage correspondant à une direction d'agencement de tête de la tête d'impression.

5. Dispositif de spécification de plage selon l'une des revendications 1 à 4, dans lequel lesdits moyens de commande d'affichage de plage de sélection affichent la plage de sélection dans la région d'affichage en affichant un cadre rectangulaire dont les positions en diagonale sont spécifiées par deux points désignés dans la région d'affichage, ou en affichant un cadre circulaire dont le centre est spécifié par l'un des deux points désignés dans la région d'affichage et dont le rayon est spécifié par la distance entre les deux points désignés.

6. Dispositif de spécification de plage selon l'une des revendications 1 à 5, dans lequel, si la taille de la plage de sélection en conséquence de l'ajustement de longueur dépasse celle des informations d'image elles-mêmes, lesdits moyens d'ajustement de longueur de plage spécifiée n'effectuent pas l'ajustement de longueur à la taille ; ou dépasse celle de la région d'affichage maximum du dispositif d'affichage, lesdits moyens d'ajustement de longueur de plage spécifiée n'effectuent pas l'ajustement de longueur à la taille.

7. Procédé de spécification de plage à utiliser pour obtenir une sortie en spécifiant une plage arbitraire d'informations d'image affichées sur une région d'affichage d'un dispositif d'affichage et développer les données d'image contenues dans la plage spécifiée dans une région de sortie de taille souhaitée, comprenant les étapes suivantes :
déterminer au moins l'une d'une longueur dans la direction de largeur et d'une longueur dans la direction de longueur d'une région de sortie souhaitée d'un dispositif d'impression, ladite au moins une longueur correspondant à un nombre de points d'impression prédéterminé dans une direction respective ;
spécifier une plage de sélection souhaitée dans la région d'affichage sur la base de l'affichage d'un pointeur qui indique n'importe quelle position désignée dans la région d'affichage ;
afficher de manière reconnaissable la plage de sélection spécifiée par l'étape ci-dessus dans la région d'affichage ;
détecter au moins l'une d'une longueur dans la direction de largeur et d'une longueur dans la direction de longueur de la plage de sélection qui a été spécifiée par l'utilisation du pointeur ;
comparer la longueur détectée de la plage de sélection avec la longueur déterminée de la région de sortie et obtenir une longueur qui est un multiple entier ou un sous-multiple entier de la longueur de la région de sortie et qui est la plus proche de la longueur détectée parmi ces longueurs ; et
recevoir une entrée prédéterminée et changer au moins l'une de la longueur dans la direction de largeur et de la longueur dans la direction de longueur de la plage de sélection en la longueur obtenue en réponse à l'entrée prédéterminée.

8. Procédé de spécification de plage selon la revendication 7, comprenant en outre les étapes suivantes :
capturer des données d'image contenues dans la plage de sélection qui a été modifiée par des moyens d'ajustement de longueur de plage spécifiée ;
augmenter ou réduire proportionnellement les données d'image capturées à l'étape ci-dessus de sorte que la longueur dans la direction de largeur ou la longueur dans la direction de longueur des données d'image soit délivrée à une longueur correcte correspondant au nombre de points prédéterminé ; et
exécuter une commande pour délivrer les données d'image traitées.

9. Support d'enregistrement pouvant être lu par un ordinateur mémorisant un programme pour l'exécution du procédé de spécification de plage selon l'une des revendications 7 ou 8.
